# EUROPÄISCHE PATENTSCHRIFT

(11) **EP 0 742 073 B1**
(45) Veröffentlichungstag und Bekanntmachung des Hinweises auf die Patenterteilung: **25.04.2001**
(21) Anmeldenummer: 96102433.8
(22) Anmeldetag: 17.02.1996
(51) Int. Cl.: B23Q 7/00, B23Q 7/14

(54) **Maschinenzentrum mit Werkstückwechsler**
Machining centre with workpiece changing equipment
Centre d'usinage avec un dispositif de changement des pièces

(30) Priorität: 11.05.1995 DE 19516849
(43) Veröffentlichungstag der Anmeldung: 13.11.1996
(73) Patentinhaber: CHIRON-WERKE GMBH & CO. KG, 78532 Tuttlingen (DE)
(72) Erfinder: Haninger, Rudolf, 78606 Seitingen (DE); Winkler, Hans-Henning, Dr.-Ing., 78532 Tuttlingen (DE)
(74) Vertreter: Otten, Hajo, Dr.-Ing.

(56) Entgegenhaltungen:
- EP-A- 0 087 996
- US-A- 4 678 393
- US-A- 5 688 084

## Beschreibung

Die vorliegende Erfindung betrifft ein Maschinenzentrum mit Werkzeugmaschinen, die jeweils einen durch eine Bedienertür zugänglichen Arbeitsraum zum Bearbeiten von Werkstücken aufweisen, einer Be-/Entladestation für die Werkstücke und einer Ladevorrichtung, die die Werkstücke zwischen der Be-/Entladestation und der jeweiligen Werkzeugmaschine transportiert und an der Werkzeugmaschine auswechselt.

Derartige Maschinenzentren sind allgemein bekannt (siehe z.B. US-A-56 88 084).

Bei den bekannten Maschinenzentren sind die Ladevorrichtungen vor den jeweiligen Werkzeugmaschinen angeordnet, die nebeneinander entweder geradlinig oder im Kreis aufgestellt sind. Die Ladevorrichtung weist ein Gerät auf, das zwischen der Be/Entladestation und der jeweiligen Werkzeugmaschine hin- und herfährt und dabei Werkstücke transportiert. Auf diese Weise kann eine größere Anzahl von Werkzeugmaschinen über eine einzige Be-/Entladestation beschickt werden, an der die zu bearbeitenden Werkstücke eingegeben und die fertig bearbeiteten Werkstücke wieder entnommen werden.

Die Ladevorrichtung arbeitet dabei häufig auf der Höhe der Bedienertür und wechselt die Werkstücke durch diese an der Werkzeugmaschine aus. Die Bedienertür wird aber gleichzeitig auch für Rüst- und Servicezwecke benötigt, also zur Wartung, zum Austausch von Werkzeugen, zum Nachmessen von Werkzeugen oder bestimmten Geometriefaktoren etc.

Wenn an einer der Werkzeugmaschinen des bekannten Maschinenzentrums eine Störung auftritt oder eine Wartungsarbeit erforderlich ist, so muß die jeweilige Bedienungsperson "an der Ladevorrichtung vorbei" durch die Bedienertür hindurch in den Arbeitsraum der Werkzeugmaschine eingreifen, um die erforderlichen Arbeiten vorzunehmen. Das bedeutet jedoch weiter, daß die anderen Werkzeugmaschinen des Maschinenzentrums von der Ladevorrichtung nicht weiter bedient werden können, wenn der Sicherheit der Bedienungsperson Vorrang gegeben wird.

Mit anderen Worten, solange die Bedienungsperson an einer der Werkzeugmaschinen durch die Bedienertür hindurch hantiert, kann das Gerät der Ladevorrichtung an dieser Werkzeugmaschine nicht vorbeifahren, ohne daß die Bedienerperson gefährdet wird.

Eine Ladevorrichtung für eine Werkzeugmaschine ist aus der US-4 678 393 bekannt. Die Ladevorrichtung umfaßt ein Belade- und ein Entladefördermittel zur Zufuhr bzw. zum Abtransport von Werkstücken. Ein erster Greifer ist so angeordnet, daß er in einer Linearbewegung Werkstücke vom Beladefördermittel aufnehmen und in einer Bearbeitungsstation der Werkzeugmaschine absetzen kann. Ein zweiter Greifer überführt die bearbeiteten Werkstücke von der Bearbeitungsstation auf das Entladefördermittel.

Die EP-A1-0 087 996 beschreibt einen automatischen Werkstückwechsler für eine Automatendrehmaschine, bei der der Wechsler seitlich an dem Maschinenbett angeordnet und parallel zur Drehachse der Werkstückspindel verfahrbar ist.

Ausgehend hiervon ist es Aufgabe der vorliegenden Erfindung, das bekannte Maschinenzentrum derart weiterzubilden, daß es bei geringem konstruktivem Aufwand besser nutzbar ist, wobei eine erhöhte Arbeitssicherheit für die Bedienungsperson und eine erhöhte Funktionssicherheit für die Werkzeugmaschine errreicht werden soll.

Erfindungsgemäß wird diese Aufgabe bei einem eingangs genannten Maschinenzentrum dadurch gelöst, daß die Ladevorrichtung unterhalb des Arbeitsraumes der jeweiligen Werkzeugmaschine in einem Laderraum angeordnet ist, der durch eine jeweilige Ladeöffnung mit dem jeweiligen Arbeitsraum verbunden ist, durch die hindurch die Ladevorrichtung die Werkstücke auswechselt.

Die der Erfindung zugrunde liegende Aufgabe wird auf diese Weise vollkommen gelöst. Die Erfinder der vorliegenden Anmeldung haben nämlich erkannt, daß die Ladevorrichtung dadurch sozusagen unter die Arbeitsfläche der Werkzeugmaschine gebracht werden kann, so daß die Bedienertür jetzt wieder für Rüst- und Servicearbeiten, Reparaturmaßnahmen etc. frei ist. Das bedeutet weiter, daß alle anderen Werkzeugmaschinen des neuen Maschinenzentrums von der Ladevorrichtung weiterhin bedient werden können, ohne daß Gefahren für die Bedienungsperson bestehen.

Dadurch, daß die Ladevorrichtung unterhalb des Arbeitsraumes der Werkzeugmaschine angeordnet ist, befindet sie sich auch automatisch nahezu vollständig innerhalb der äußeren Kontur, also der Verkleidung der Werkzeugmaschine bzw. des Maschinenzentrums, so daß auch die erforderliche Stellfläche für das Maschinenzentrum reduziert wird.

Die Ladeöffnung ist dabei im Hinblick auf die Funktionssicherheit des Maschinenzentrums von Vorteil, denn der Arbeitsraum der jeweiligen Werkzeugmaschine ist nicht gänzlich zu dem Laderraum hin frei, sondern nur durch eine Ladeöffnung mit diesem verbunden, so daß während der Bearbeitung der Werkstücke entstehende Späne, verwendetes Bohrwasser etc. die Ladevorrichtung nur geringfügig beeinträchtigen. Sollte die Ladeöffnung geometrisch günstig ausgebildet und angeordnet sein, kann diese Verschmutzung der Ladevorrichtung sehr gering gehalten werden.

Dabei ist es bevorzugt, wenn die jeweilige Werkzeugmaschine vor ihrem jeweiligen, einen in dem jeweiligen Arbeitsraum angeordneten Werkstücktisch tragenden Maschinenfuß einen Laderraum aufweist, in dem die Ladevorrichtung vorzugsweise innerhalb einer Verkleidung der Werkzeugmaschine angeordnet ist.

Hier ist von Vorteil, daß die Ladevorrichtung einerseits platzgünstig in einem Raum angeordnet ist, der bei Werkzeugmaschinen entweder vorhanden ist oder aber ohne weiteres bereitgestellt werden kann. Dadurch, daß sich die Ladevorrichtung gegebenenfalls innerhalb der Verkleidung der Werkzeugmaschine befindet, ist für einen besonders sicheren Schutz der Bedienungsperson gesorgt, die an einer Werkzeugmaschine arbeitet, an der die Ladevorrichtung gerade vorbeifährt, um eine Werkzeugmaschine stromabwärts von der z.B. in Reparatur befindlichen Werkzeugmaschine zu bedienen.

In einer Weiterbildung ist es bevorzugt, wenn der Ladeöffnung eine Abdeckung zugeordnet ist, die zum Auswechseln eines Werkstückes geöffnet wird.

Auf diese Weise wird ein vollkommener Schutz der Ladevorrichtung vor Verschmutzung erreicht. Die Abdeckung wird nur dann geöffnet, wenn ein Werkstück ausgewechselt wird, wobei während dieses Werkstückwechsels die Werkzeugmaschine selbst nicht arbeitet,
so daß durch die dann geöffnete Ladeöffnung kein Schmutz mehr in den Laderraum gelangen kann. Auch diese Maßnahme trägt also zur Funktionssicherheit des neuen Maschinenzentrums bei.

Dabei ist es dann weiter bevorzugt, wenn die Abdeckung bei geöffneter Bedienertür mechanisch und/oder elektrisch/elektronisch verriegelt ist.

Diese Maßnahme erhöht noch einmal die Arbeitssicherheit für die Bedienungsperson, denn es wird so verhindert, daß die Ladevorrichtung in den Arbeitsraum einer Werkzeugmaschine eingreift, an der gerade eine Bedienungsperson z.B. zum Austausch von Werkzeugen tätig ist. Diese Verriegelung kann entweder rein mechanisch erfolgen, so daß eine geöffnete Bedienertür durch einen mechanischen Anschlag u.ä. verhindert, daß die Ablaufsteuerung die Abdeckung der Ladeöffnung freigibt. Dabei sind ggf. weitere Maßnahmen vorgesehen, die verhindern, daß die Ladevorrichtung versucht, durch eine geschlossene Ladeöffnung hindurch ein Werkstück auszuwechseln.

Im Zuge der fortschreitenden elektrischen/elektronischen Steuerung von Werkzeugmaschinen kann es auch vorgesehen sein, daß die zur Öffnung der Abdeckung vorgesehenen Steuermittel durch die Ablaufsteuerung blockiert werden, sobald die Bedienertür geöffnet wird.

Allgemein ist es bevorzugt, wenn die Ladevorrichtung ein längs einer vorzugsweise im Querschnitt profilierten Führungsschiene verfahrbares Ladegerät aufweist, das als Werkstückwechsler dient.

Diese Maßnahme ist im Hinblick auf eine einfache Konstruktion des Maschinenzentrums von Vorteil, denn es ist nur ein Ladegerät erforderlich, obwohl viele verschiedene Werkzeugmaschinen in Reihe oder im Kreis in dem neuen Maschinenzentrum vorgesehen sein können. Es wäre zwar möglich, die Werkstücke in dem Laderraum zu verfahren, und an jeder Werkzeugmaschine analog zu dem Werkzeugwechsler auch einen Werkstückwechsler vorzusehen, die damit verbundenen Kosten wären jedoch erheblich.

Dabei ist es bevorzugt, wenn das Ladegerät eine selbsttätig längs der Führungsschiene fahrende Antriebseinheit aufweist.

Auch diese Maßnahme ist unter konstruktiven Gesichtspunkten von Vorteil, denn um das Ladegerät zwischen den Werkzeugmaschinen und der Be-/Entladestation zu verfahren sind keine Ketten, Riemen oder ähnliche Mittel erforderlich, die bei Werkzeugmaschinen ansonsten häufig eingesetzt werden. Bei dem Ladegerät handelt es sich somit sozusagen um einen selbstfahrenden Werkstückwechsler.

Weiter ist es bevorzugt, wenn das Ladegerät einen Schwenkarm aufweist, der beim Verfahren des Ladegeräts eingeklappt ist und zum Werkstückwechsel durch die Ladeöffnung zumindest teilweise in den Arbeitsraum geschwenkt wird.

Hier ist von Vorteil, daß die Ladevorrichtung nur einen geringen Platzbedarf hat, das Ladegerät ist während des Verfahrens sozusagen zusammengeklappt, so daß die Ladevorrichtung auf sehr kleinem Raum unterhalb des Arbeitsraumes der Werkzeugmaschinen angeordnet werden kann.

In einer Weiterbildung ist es dann bevorzugt, wenn an dem Schwenkarm ein Doppelgreifer für Werkstücke angeordnet ist.

Bei dieser Maßnahme ist es von Vorteil, daß der Werkstückwechsel sehr schnell erfolgen kann, der Doppelgreifer erfaßt nämlich das gerade fertig bearbeitete Werkstück und tauscht es in einer einzigen Arbeitsbewegung gegen ein neu zu bearbeitendes Werkstück aus, woraufhin der Schwenkarm wieder in den Laderraum zurückgeklappt wird. Dieser sehr schnell erfolgende Werkstückwechsel führt zu dem weiteren Vorteil, daß mehr Werkzeugmaschinen in dem neuen Maschinenzentrum nebeneinander angeordnet werden können, da die Ladevorrichtung jetzt innerhalb der üblichen Bearbeitungszeit, die eine der Werkzeugmaschinen zur Bearbeitung des gerade eingewechselten Werkstückes benötigt, mehr andere Werkzeugmaschinen bedienen kann.

Insgesamt ist es bevorzugt, wenn die Werkstücke in Werkstückhaltern eingespannt sind, die in Vorrichtungshalter eingewechselt werden, die sich in dem jeweiligen Arbeitsraum der jeweiligen Werkzeugmaschine befinden.

Hierdurch wird auch vorteilhafterweise die Funktionssicherheit des neuen Maschinenzentrums erhöht, denn die Vorrichtungshalter sowie die Ladevorrichtung müssen lediglich dazu ausgelegt sein, diese Werkstückhalter zu erfassen, so daß ohne Rüstzeiten unterschiedliche Werkstücke bearbeitet werden können.

Weiter ist es dann bevorzugt, wenn die Be-/Entladestation eine Spannstation umfaßt, an der die Werkstücke in den Werkstückhaltern ausgewechselt werden.

Diese Maßnahme ist zum einen unter konstruktiven Aspekten von Vorteil, denn das neue Maschinenzentrum kann jetzt sozusagen vollautomatisch betrieben werden. Ein weiterer Vorteil dieser Maßnahme liegt darin, daß das neue Maschinenzentrum lediglich zwei Werkstückhalter mehr benötigt als Werkzeugmaschinen in dem Maschinenzentrum vorhanden sind. Der eine zusätzliche Werkstückhalter befindet sich jeweils in der Spannstation und wird mit einem neuen Werkstück versehen, während sich der zweite zusätzliche Werkstückhalter jeweils an dem Ladegerät befindet und gegen einen anderen Werkstückhalter mit fertig bearbeitetem Werkstück an der Werkzeugmaschine ausgetauscht wird.

Selbstverständlich ist es mit dem neuen Maschinenzentrum auch möglich, Werkstücke der Reihe nach von verschiedenen Werkzeugmaschinen des Maschinenzentrums bearbeiten zu lassen. Die Ladevorrichtung wechselt dann z.B. ein noch unbearbeitetes Werkstück in eine erste Werkzeugmaschine ein und übernimmt dabei ein hier bearbeitetes Werkstück, das dann an einer zweiten Werkzeugmaschine eingewechselt wird, wobei dort ein Werkstück übernommen wird, das nunmehr bereits zwei Arbeitsgängen unterworfen wurde. Dieses Werkstück kann dann an einer dritten Werkzeugmaschine gegen ein dort bereits weiter bearbeitetes Werkstück ausgetauscht werden, u.s.w.

Zusammengefaßt liegen die Vorteile des neuen Maschinenzentrums also zum einen darin, daß die unter den Arbeitsräumen angeordnete Ladevorrichtung auch dann weiter betrieben werden kann, wenn eine oder mehrere der Werkzeugmaschinen gerade gewartet werden. Die Ladevorrichtung fährt dann unterhalb dieser zur Zeit nicht betriebsbereiten Werkzeugmaschinen durch und bedient nur die jeweils anderen Werkzeugmaschinen des Maschinenzentrums. Weil die Ladevorrichtung jetzt in dem gesonderten Laderraum angeordnet ist, ist darüber hinaus für größtmögliche Arbeitssicherheit der Bedienungsperson gesorgt. Die spezielle Ausgestaltung des Laderraums und der Ladevorrichtung sorgen weiter dafür, daß die Ladevorrichtung gegen Schmutzeintrag etc. geschützt ist und nur dann auf den Arbeitsraum einer Werkzeugmaschine zugreift, wenn die Bedienertür geschlossen ist. Dies erhöht die Arbeitssicherheit und zum anderen die Funktionssicherheit der Ladevorrichtung. Durch den Einsatz von Werkstückhaltern und eines selbstfahrenden Werkstückwechslers wird außerdem bei geringem konstruktivem Aufwand und mit geringem Materialeinsatz für einen sehr schnellen Werkstückwechsel gesorgt, so daß die Anzahl der Werkzeugmaschinen pro Maschinenzentrum bei geringen Kosten relativ hoch gewählt werden kann.

Dabei ist es allgemein bevorzugt, wenn die Abdeckung eine im geschlossenen Zustand im wesentlichen senkrecht angeordnete Klappabdeckung aufweist, die teilweise von einer im wesentlichen horizontal verlaufenden Schiebeabdeckung bedeckt wird.

Hier ist von Vorteil, daß durch die Kombination dieser beiden Abdeckungen eine möglichst große Ladeöffnung zur Verfügung gestellt wird, wenn der Werkstückwechsel erfolgt, wobei durch die erwähnte geometrische Zuordnung der Schiebeabdeckung zu der Klappabdeckung dafür gesorgt wird, daß im geschlossenen Zustand der Abdeckung kein Schmutz zu der Ladevorrichtung gelangt.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen. Ein Ausführungsbeispiel der Erfindung ist in der Zeichnung dargestellt und wird in der nachfolgenden Beschreibung näher erläutert. Es zeigen:
- Fig. 1: eine Vorderansicht des neuen Maschinenzentrums, im Ausschnitt;
- Fig. 2: einen Schnitt durch das Maschinenzentrum aus Fig. 1 längs der Linie II-II, ohne Ladegerät im Laderraum;
- Fig. 3: einen Schnitt längs der Linie III-III aus Fig. 1, mit in Position befindlichem Ladegerät und eingeklapptem Schwenkarm; und
- Fig. 4: eine Darstellung wie Fig. 3, aber mit ausgeklapptem Schwenkarm.

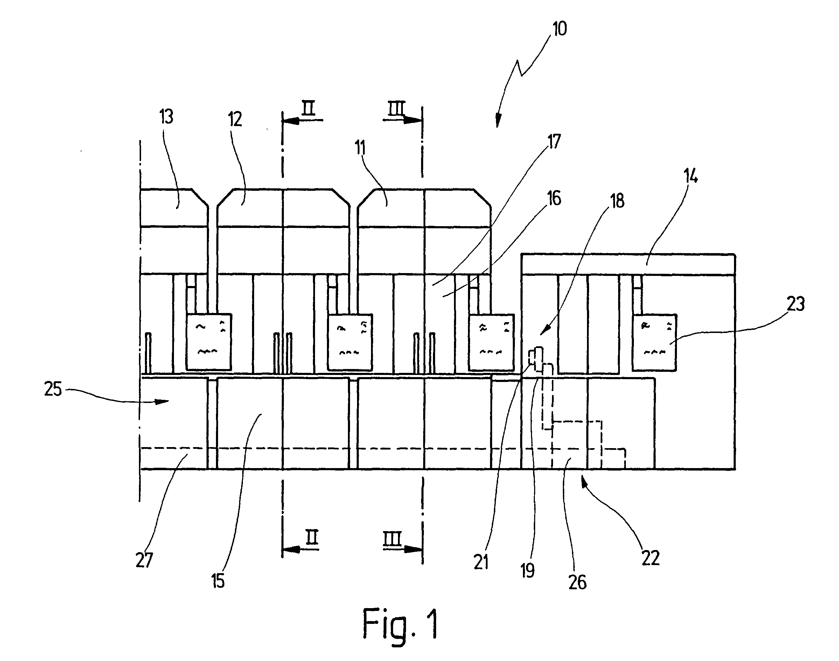

Fig. 1 zeigt in einer Frontansicht ein Maschinenzentrum 10, bei dem Werkzeugmaschinen 11, 12 und 13 (nur angedeutet) nebeneinander angeordnet sind. Diese Werkzeugmaschinen 11, 12, 13 können entweder geradlinig oder im Kreis aufgestellt sein. Neben den Werkzeugmaschinen 11, 12 und 13 ist eine Be-/Entladestation 14 vorgesehen.

Die Werkzeugmaschinen 11, 12, 13 weisen eine sie vollständig umgebende Verkleidung 15 auf, in der bei jeder Werkzeugmaschine 11, 12, 13 eine Bedienertür 16 vorgesehen ist, durch die hindurch eine Bedienungsperson Zugriff auf einen Arbeitsraum 17 hat. Durch diese Bedienertür 16 hindurch werden bei den einzelnen Werkzeugmaschinen 11, 12, 13 Rüst- und Servicemaßnahmen durchgeführt.

In der Be-/Entladestation 14 ist eine lediglich schematisch angedeutete Spannstation 18 vorgesehen, in der einzelne Werkstückhalter 19 mit zu bearbeitenden Werkstücken 21 versehen werden. Die so mit Werkstücken 21 versehenen Werkstückhalter 19 werden mittels einer Ladevorrichtung 22 zu den einzelnen Werkzeugmaschinen 11, 12, 13 transportiert und dort in den jeweiligen Arbeitsraum 16 eingewechselt und bearbeitet. Die fertig bearbeiteten Werkstücke 21 werden mit ihren Werkstückhaltern 19 aus den Arbeitsräumen 17 zurück zu der Spannstation 18 transportiert, wo sie gegen neu zu bearbeitende Werkstücke 21 ausgewechselt werden.

In Fig. 1 ist ferner zu erkennen, daß an jeder Werkzeugmaschine 11, 12, 13 und der Be-/Entladestation 14 ein Bedienerpult 23 vorgesehen ist, über das die üblichen Bedienereingaben erfolgen können.

Erfindungsgemäß ist bei dem neuen Maschinenzentrum 10 aus Fig. 1 die Ladevorrichtung 22 in einem Laderraum 25 angeordnet, der sich unterhalb der Arbeitsräume 17 der Werkzeugmaschinen 11, 12, 13 und vorzugsweise innerhalb der Verkleidung 15 befindet. In diesem Laderraum 25 läuft ein Ladegerät 26 längs einer Führungsschiene 27 hin und her und transportiert dabei die die Werkstücke 21 enthaltenden Werkstückhalter 19 zwischen der Spannstation 18 und den Arbeitsräumen 17.

Aufgrund der speziellen Anordnung der Ladevorrichtung 22 sind die Bedienertüren 16 der Werkzeugmaschinen 11, 12, 13 jederzeit für Bedienungspersonen zugänglich, ohne daß diese durch das ggf. vorbeifahrende Ladegerät 26 gefährdet sind.

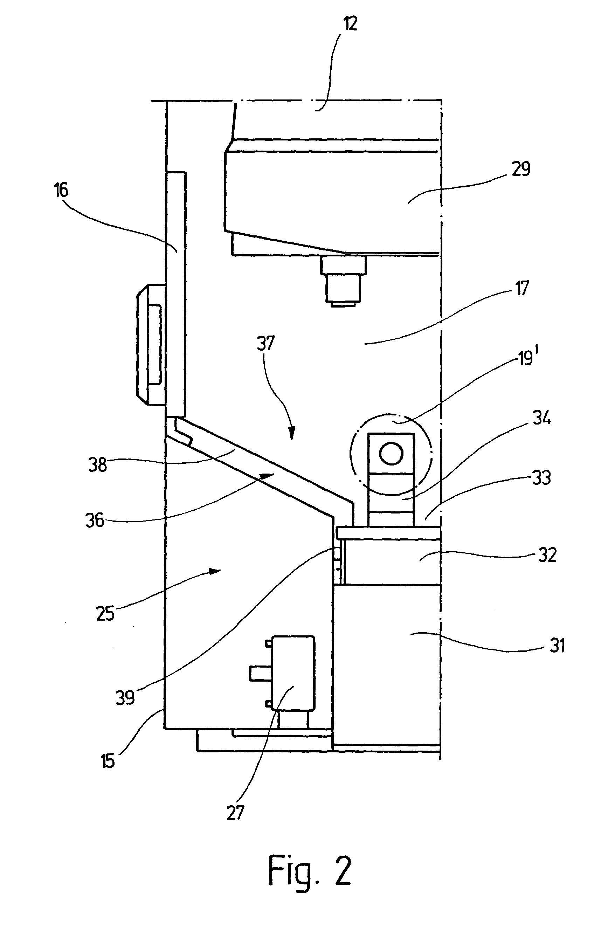

In Fig. 2 ist in einer ausschnittsweisen Schnittdarstellung längs der Linie II-II aus Fig. 1 ein Querschnitt durch die Werkzeugmaschine 12 gezeigt, wobei ein Spindelkopf 29 angedeutet ist, der zum Bearbeiten der Werkstücke in dem Arbeitsraum 17 vorgesehen ist.

Die Werkzeugmaschine 12 umfaßt einen Maschinenfuß 31, auf dem ein schematisch angedeuteter Werkstücktisch 32 vorgesehen ist, der sozusagen eine Arbeitsfläche 33 in dem Arbeitsraum 17 aufspannt. Auf dem Werkstücktisch 32 ist ein Vorrichtungshalter 34 angeordnet, der dazu ausgerüstet ist, die Werkstückhalter 19 zu ergreifen und während der Bearbeitung durch Werkzeuge in dem Spindelkopf 29 zu halten. In Fig. 2 ist mit 19' ein Werkstückhalter bezeichnet, der ein fertig bearbeitetes Werkstück hält, wobei der Werkstückhalter 19' lediglich schematisch durch einen Kreis angedeutet ist.

In Fig. 2 ist deutlich zu erkennen, daß in der dortigen Darstellung links von dem Maschinenfuß 31 der Laderraum 25 angeordnet ist, der sich unterhalb des Arbeitsraumes 17 und zumindest teilweise unterhalb der Arbeitsfläche 33 befindet. Ferner ist deutlich zu erkennen, daß der Laderraum 25 im Querschnitt innerhalb der Verkleidung 15 angeordnet ist.

Durch eine Ladeöffnung 36 hindurch ist der Laderraum 25 mit dem Arbeitsraum 17 verbunden. Dabei ist eine Abdeckung 37 vorgesehen, die während der Bearbeitung der Werkstücke durch Werkzeuge in dem Arbeitsraum 17 geschlossen ist, so daß keine Verschmutzungen in den Laderraum 25 gelangen.

Die Abdeckung 37 ist zweiteilig ausgebildet und umfaßt eine Schiebeabdeckung 38, die in Fig. 2 nach oben weist und zu der Arbeitsfläche 33 hin geneigt ist, sowie eine Klappabdeckung 39, die in etwa senkrecht zu der Arbeitsfläche 33 verläuft und auf diese zu geklappt werden kann. Es ist zu erkennen, daß die Schiebeabdeckung 38 über die Klappabdeckung 39 übergreift, so daß herumspritzendes Bohrwasser, herumfliegende Werkstückspäne etc. auch nicht zwischen der Schiebeabdeckung 38 und der Klappabdeckung 39 hindurch in den Laderraum 25 gelangen können.

Auf in Fig. 2 nicht näher dargestellte Weise ist die Abdeckung 37 mit der Bedienertür 16 derart verriegelt, daß die Abdeckung 37 nur dann geöffnet werden kann, wenn die Bedienertür 16 geschlossen ist. Auf diese Weise wird sichergestellt, daß eine in dem Arbeitsraum 17 an der Werkzeugmaschine 12 arbeitende Bedienungsperson nicht durch einen plötzlich erfolgenden Werkstückwechsel verletzt werden kann. Sollte die Bedienertür 16 geöffnet sein, so wird vielmehr durch geeignete Steuermaßnahmen dafür gesorgt, daß das Ladegerät 26 an dieser Werkzeugmaschine vorbeifährt und die nächste Werkzeugmaschine bedient, so daß der Ausfall einer Werkzeugmaschine in dem Maschinenzentrum 10 nicht zum vollständigen Ausfall des Maschinenzentrums führt. Auch von der Be-/Entladestation 14 gesehen stromabwärts von der zur Zeit in Wartung befindlichen Werkzeugmaschine gelegene Werkzeugmaschinen können also durch die Ladevorrichtung 22 mit neuen Werkstücken versorgt werden.

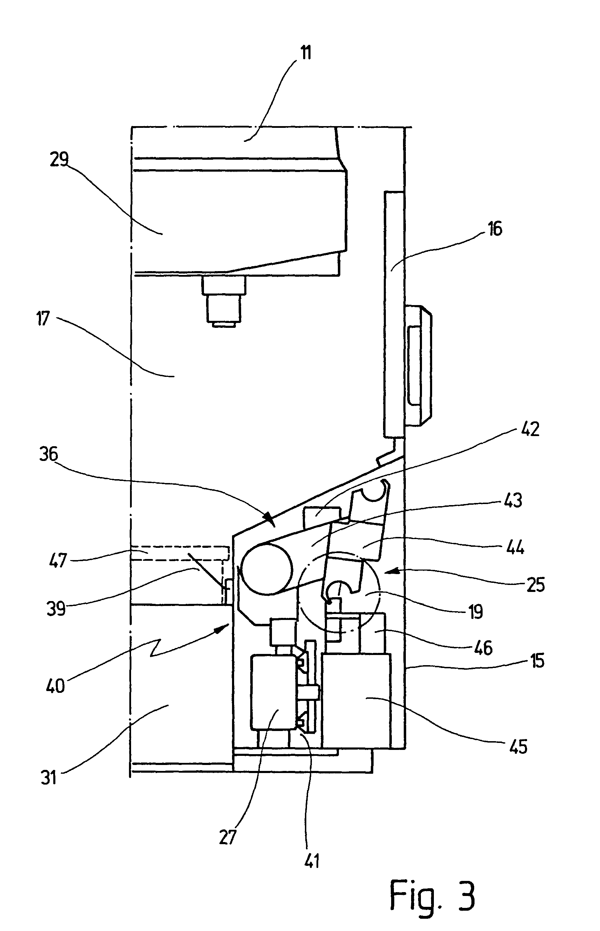

In Fig. 3 ist jetzt in einer Darstellung ähnlich wie Fig. 2 jedoch längs der Linie III-III aus Fig. 1 die Situation gezeigt, in der die Abdeckung 37 geöffnet und das Ladegerät 26 in den Bereich unterhalb des Arbeitsraumes 17 hier der Werkzeugmaschine 11 gefahren ist.

Dieses Ladegerät 26 ist sozusagen ein selbstfahrender Werkstückwechsler 40, der eine an der Führungsschiene 27 angreifende Antriebseinheit 41 mit Motor 42 aufweist, die auf geeignete Weise für die Verfahrbarkeit des Ladegerätes 26 längs der im Querschnitt vorzugsweise profilierten Führungsschiene 27 sorgt.

Der verfahrbare Werkstückwechsler 40 weist ferner einen daran klappbar oder schiebbar befestigten Schwenkarm 43 auf, der in Fig. 3 so eingeklappt ist, daß er sich in dem Laderraum 25 befindet. An dem oberen Ende des Schwenkarmes 43 ist ein drehbarer Doppelgreifer 44 angeordnet, der an seiner einen Hand einen Werkstückhalter 19 trägt, während die andere Hand noch frei ist.

In Fig. 3 ist deutlich zu erkennen, daß das Ladegerät 26 in der gezeigten Stellung kompakt zusammengeklappt ist, so daß der Laderraum 25 vor dem Maschinenfuß 31 und unterhalb des Arbeitsraumes 17 angeordnet werden kann, ohne daß die Außenkontur der Werkzeugmaschine deutlich verändert werden muß.

In Fig. 3 ist ferner noch ein üblicher Kabelschlepp 45 zu erkennen, der elektrische, pneumatische und ggf. hydraulische Verbindungen 46 für das Ladegerät 26 bereitstellt und dieses über die Verbindungen 46 mit der zugeordneten Steuereinheit/dem Bedienerpult 23 verbindet.

In Fig. 3 ist weiter ein hinter der Klappabdeckung 39 angeordneter Werkstücktisch 47 zu erkennen, der z.B. ein Widerlager tragen kann, um eingespannte Werkstücke besser zentrieren zu können.

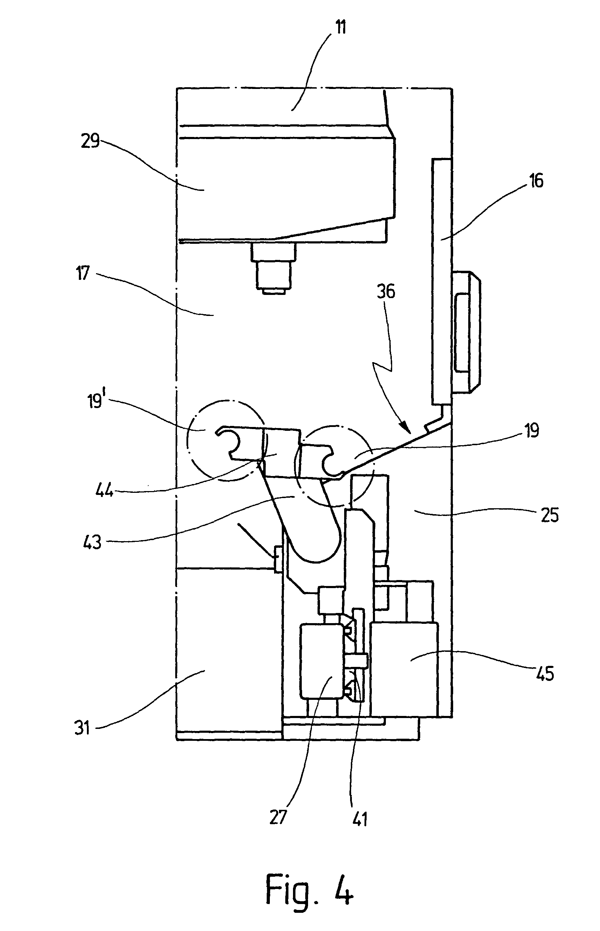

In der Darstellung der Fig. 4, die ansonsten der Fig. 3 entspricht, wurde der Schwenkarm 43 durch die Ladeöffnung 36 hindurch in den Arbeitsraum 17 geschwenkt oder ausgefahren, wo der Doppelgreifer 44 bereits den Werkstückhalter 19' ergriffen hat, der ein Werkstück trägt, das von der Werkzeugmaschine 11 bereits bearbeitet wurde. Durch eine Schwenkbewegung in der Ebene der Fig. 4 um 180° werden jetzt der Werkstückhalter 19 und der Werkstückhalter 19' ausgetauscht, so daß der in Fig. 2 zu erkennende Vorrichtungshalter 34 den Werkstückhalter 19 mit dem noch unbearbeiteten Werkstück übernehmen kann. Daraufhin wird der Schwenkarm 43 wieder eingeklappt oder eingezogen, so daß die in Fig. 3 gezeigte Stellung eingenommen wird.

Schließlich wird die Abdeckung 37 geschlossen, so daß die Bearbeitung des neuen Werkstückes in dem Arbeitsraum 17 in der Werkzeugmaschine 11 erfolgen kann, während das Ladegerät 26 den Werkstückhalter 19' zu der Be-/Entladestation 18 bringt und dort gegen einen Werkstückhalter 19 austauscht, der in der Spannstation 18 mit einem noch zu bearbeitenden Werkstück versehen wurde.

## Patentansprüche

1. Maschinenzentrum mit Werkzeugmaschinen (11, 12, 13), die jeweils einen durch eine Bedienungstür (16) zugänglichen Arbeitsraum (17) zum Bearbeiten von Werkstücken (21) aufweisen, einer Be-/Entladestation (14) für die Werkstücke (21) und einer Ladevorrichtung (22), die die Werkstücke (21) zwischen der Be-/Entladestation (14) und der jeweiligen Werkzeugmaschine (11, 12, 13) transportiert und an der jeweiligen Werkzeugmaschine (11, 12, 13) auswechselt,
dadurch gekennzeichnet, daß die Ladevorrichtung (22) unterhalb des Arbeitsraumes (17) der jeweiligen Werkzeugmaschine (11, 12, 13) in einem Laderraum (25) angeordnet ist, der durch eine jeweilige Ladeöffnung (36) mit dem jeweiligen Arbeitsraum (17) verbunden ist, durch die hindurch die Ladevorrichtung (22) die Werkstücke (21) auswechselt.

2. Maschinenzentrum nach Anspruch 1, dadurch gekennzeichnet, daß die jeweilige Werkzeugmaschine (11, 12, 13) vor ihrem jeweiligen, einen in dem jeweiligen Arbeitsraum (17) angeordneten Werkstücktisch (32) tragenden Maschinenfuß (31) den Laderraum (25) aufweist, in dem die Ladevorrichtung (22) vorzugsweise innerhalb einer Verkleidung (15) angeordnet ist.

3. Maschinenzentrum nach Anspruch 1 oder 2, dadurch gekennzeichnet, daß der Ladeöffnung (36) eine Abdeckung (37; 38, 39) zugeordnet ist, die zum Auswechseln eines Werkstückes (21) geöffnet wird.

4. Maschinenzentrum nach Anspruch 3, dadurch gekennzeichnet, daß die Abdeckung (37; 38, 39) bei geöffneter Bedienertür (16) mechanisch und/oder elektrisch/elektronisch verriegelt ist.

5. Maschinenzentrum nach einem der Ansprüche 1 bis 4, dadurch gekennzeichnet, daß die Ladevorrichtung (22) ein längs einer vorzugsweise im Querschnitt profilierten Führungsschiene (27) verfahrbares Ladegerät (26) aufweist, das als Werkstückwechsler (40) dient.

6. Maschinenzentrum nach Anspruch 5, dadurch gekennzeichnet, daß das Ladegerät (26) eine selbsttätig längs der Führungsschiene (27) fahrende Antriebseinheit (41) aufweist.

7. Maschinenzentrum nach Anspruch 5 oder 6, dadurch gekennzeichnet, daß das Ladegerät (26) einen Arm, vorzugsweise einen Schwenkarm (43) aufweist, der beim Verfahren des Ladegeräts (26) eingeklappt oder eingezogen ist und zum Werkstückwechsel durch die Ladeöffnung (36) zumindest teilweise in den Arbeitsraum (17) gefahren oder geschwenkt wird.

8. Maschinenzentrum nach Anspruch 7, dadurch gekennzeichnet, daß an dem Schwenkarm (43) ein Doppelgreifer (44) für Werkstücke (21) angeordnet ist.

9. Maschinenzentrum nach einem der Ansprüche 1 bis 8, dadurch gekennzeichnet, daß die Werkstücke (21) in Werkstückhaltern (19) eingespannt sind, die in Vorrichtungshalter (34) eingewechselt werden, die sich im jeweiligen Arbeitsraum (17) der jeweiligen Werkzeugmaschine (11, 12, 13) befinden.

10. Maschinenzentrum nach Anspruch 9, dadurch gekennzeichnet, daß die Be-/Entladestation (14) eine Spannstation (18) umfaßt, an der die Werkstücke (21) in den Werkstückhaltern (19) ausgewechselt werden.

11. Maschinenzentrum nach Anspruch 3, oder Anspruch 3 und einem der Ansprüche 4 bis 10, dadurch gekennzeichnet, daß die Abdeckung eine im geschlossenen Zustand im wesentlichen senkrecht angeordnete Klappabdeckung (39) aufweist, die teilweise von einer im wesentlichen horizontal verlaufenden Schiebeabdeckung (38) bedeckt wird.

## Claims

1. A machine tool center having machine tools (11, 12, 13) each of which comprises a working area (17) to process workpieces (21) and being accessible through an operator door (16), a loading/unloading station (14) for said workpieces (21), and a loading device (22) which transports said workpieces (21) between the loading/unloading station (14) and the respective machine tool (11, 12, 13) and changes the workpieces at the respective machine tool (11, 12, 13),
characterized in that the loading device (22) is arranged below the working area (17) of the respective machine tool (11, 12, 13) in a loader space (25) that is connected to the respective working area (17) by a respective loading opening (36) through which the loading device (22) changes the workpieces (21).

2. The machine tool center of claim 1, characterized in that the respective machine tool (11, 12, 13) comprises said loader space (25), in which the loading device (22) is arranged preferably within a casing (15), in front of its respective machine stand (31) that supports a workpiece table (32) arranged within the respective working area (17).

3. The machine tool of claim 1 or claim 2, characterized in that the loading opening (36) is associated with a cover (37; 38, 39) which is opened to change a workpiece (21).

4. The machine tool center of claim 3, characterized in that the cover (37; 38, 39) is mechanically and/or electrically/electronically locked when the operator door (16) is open.

5. The machine tool center of any of claims 1-4, characterized in that the loading device (22) comprises a loader (26) that works as workpiece changer (40) and is moveable along a guide rail (27) having a preferably profiled cross-section.

6. The machine tool center of claim 5, characterized in that the loader (26) comprises a drive unit (41) running automatically along the guide rail (27).

7. The machine tool center of claim 5 or claim 6, characterized in that the loader (26) comprises an arm, preferably a swivel arm (43), which is folded away or retracted when the loader (26) is moving, and which is at least partly moved or swiveled into the working area (17) through the loading opening (36) to change the workpiece.

8. The machine tool center of claim 7, characterized in that a double gripper (44) for workpieces (21) is arranged at the swivel arm (43).

9. The machine tool center of any of claims 1-8, characterized in that the workpieces (21) are clamped into workpiece holders (19) which are fitted into fixture holders (34) located in the respective working area (17) of the respective machine tool (11, 12, 13).

10. The machine tool center of claim 9, characterized in that the loading/unloading station (14) comprises a clamping station (18) wherein the workpieces (21) are being exchanged in the workpiece holders (19).

11. The machine tool center of claim 3 or claim 3 and any of claims 4-10, characterized in that the cover comprises a flap cover (39) that is essentially vertical when closed and that is partly covered by an essentially horizontally running sliding cover (38).

## Revendications

1. Centre d'usinage avec des machines-outils (11, 12, 13) présentant chacune un espace de travail (17) accessible par une porte opérateur (16) pour usiner des pièces (21), un poste de chargement/déchargement (14) pour les pièces (21) et un dispositif de chargement (22) qui transporte les pièces (21) entre le poste de chargement/déchargement (14) et la machine-outil (11, 12, 13) respective et les échange sur la machine-outil (11, 12, 13),
caractérisé en ce que le dispositif de chargement (22) est placé au-dessous de la zone de travail (17) de la machine-outil (11, 12, 13) respective dans une zone de chargement (25), qui est reliée à la zone de travail (17) respective par une ouverture de chargement (36) respective, à travers laquelle le dispositif de chargement (22) échange les pièces.

2. Centre d'usinage selon la revendication 1, caractérisé en ce que la machine-outil (11, 12, 13) respective présente, devant son pied de machine (31) portant un plateau porte-pièce (32) placé dans la zone de travail (17) respective, la zone de chargement (25) dans laquelle le dispositif de chargement (22) est placé de préférence à l'intérieur d'un habillage (15).

3. Centre d'usinage selon la revendication 1 ou 2, caractérisé en ce qu'à l'ouverture de chargement (36) est associée une fermeture (37 ; 38, 39) que l'on ouvre pour échanger une pièce (21).

4. Centre d'usinage selon la revendication 3, caractérisé en ce que la fermeture (37 ; 38, 39) est verrouillée mécaniquement et/ou électriquement/ électroniquement quand la porte opérateur (16) est ouverte.

5. Centre d'usinage selon l'une des revendications 1 à 4, caractérisé en ce que le dispositif de chargement (22) présente un chargeur (26) mobile le long d'un rail de guidage (27) à section profilée, chargeur qui sert de changeur de pièce (40).

6. Centre d'usinage selon la revendication 5, caractérisé en ce que le chargeur (26) présente une unité d'entraînement (41) se déplaçant automatiquement le long du rail de guidage (27).

7. Centre d'usinage selon la revendication 5 ou 6, caractérisé en ce que le chargeur (26) présente un bras, de préférence un bras pivotant (23), qui est rabattu ou rentré lors du déplacement du chargeur (26) et est basculé ou sorti au moins partiellement dans la zone de travail (17) pour le changement d'outil à travers l'ouverture de chargement (16).

8. Centre d'usinage selon la revendication 7, caractérisé en ce qu'un grappin double (44) pour pièces (21) est placé sur le bras pivotant (43).

9. Centre d'usinage selon l'une des revendications 1 à 8, caractérisé en ce que les pièces (21) sont tenues dans des supports de pièce (19), qui sont chargés dans des supports de dispositifs (34) qui se trouvent dans la zone de travail (17) respective de la machine-outil (11, 12, 13) respective.

10. Centre d'usinage selon la revendication 9, caractérisé en ce que le poste de chargement/déchargement (14) comprend un poste de serrage (18) sur lequel les pièces (21) peuvent être échangées dans les supports de pièce (19).

11. Centre d'usinage selon la revendication 3, ou selon la revendication 3 et l'une des revendications 4 à 10, caractérisé en ce que la fermeture présente une fermeture rabattante (39) placée pour l'essentiel verticalement à l'état fermé, qui est recouverte en partie par une fermeture coulissante (38) mobile pour l'essentiel dans la direction horizontale.
